# EUROPEAN PATENT APPLICATION

(11) **EP 4 231 626 A1**
(43) Date of publication of application: **23.08.2023**
(21) Application number: 21879828.8
(22) Date of filing: 17.09.2021
(51) Int. Cl.: H04N 5/232, B61L 25/04, H04N 7/18

(54) **INFORMATION PROCESSING SYSTEM AND INFORMATION PROCESSING DEVICE**

(30) Priority: 13.10.2020 JP 2020172478
(71) Applicant: Hitachi, Ltd., Tokyo 100-8280 (JP)
(72) Inventor: ASAKURA, Yasuhiko, Tokyo 100-8280 (JP); OOMIYA, Hidenori, Tokyo 100-8280 (JP); WATANABE, Shizuya, Tokyo 100-8280 (JP); TAKAHASHI Yuzuru, Tokyo 100-8280 (JP)
(74) Representative: Mewburn Ellis LLP
(86) International application number: PCT/JP2021/034341
(87) International publication number: WO 2022/080087

(57) **Abstract**

An information processing system includes an imaging apparatus capable of capturing an image of a display apparatus having a screen that displays an image or a fixed display object, and an information processing apparatus, and the information processing apparatus has a function of receiving data of a captured image from the imaging apparatus and specifies an installation position of the imaging apparatus from the captured image of the display apparatus or the fixed display object captured by the imaging apparatus. This makes it possible to specify the installation position of the imaging apparatus installed in transportation means of passengers, freight, and the like, and reduce labor of an inspector.

## Description

### Technical Field

The present disclosure relates to an information processing system and an information processing apparatus.

### Background Art

In recent railway cars, many display apparatuses such as a liquid crystal display that displays operation information and company advertisements to passengers, and imaging apparatuses such as a camera that captures an image of inside of the car are installed. There are also cars in which 100 or more of these apparatuses are installed per train.

In these display apparatuses and imaging apparatuses, there is a case where an abnormality or a failure occurs. Thus, an inspection is performed before operation is started to confirm whether or not an abnormality or a failure occurs. However, there is a problem that burden on an inspector is large, for example, the number of installed apparatuses is large and it takes time to confirm. It is therefore desired that a confirmation work can be completed quickly and the burden on the inspector is reduced.

In such a background, PTL 1 discloses an inspection support system that compares a state of display image data to be transmitted to a display apparatus installed facing an imaging apparatus with a screen state of the display apparatus determined on the basis of an image displayed in a display image captured by the imaging apparatus, and determines whether or not the display apparatus is normally operating on the basis of a result of the comparison, in order to reduce a visual confirmation work by an inspector.

### Citation List

### Patent Literature

PTL 1: JP 2012-252509 A

### Summary of Invention

### Technical Problem

In a case where an abnormality or a failure occurs in a display apparatus and an imaging apparatus of a railway car, or the like, after the apparatus is specified, an inspector goes to an installation place and performs replacement and repair.

The inspection support system described in PTL 1 can determine whether an abnormality or a failure has occurred in the display apparatus, but cannot determine whether an abnormality or a failure has occurred in the imaging apparatus, and does not specify the installation position of the imaging apparatus. In addition, the inspection support system described in PTL 1 determines that the display apparatus is not normally operating in a case where transmission of display image data is detected but nothing is displayed on the display apparatus and does not determine a partial abnormal state such as a partial defect of a display screen of the display apparatus.

An object of the present disclosure is to specify an installation position of an imaging apparatus installed in transportation means for passengers, freight, and the like, and reduce labor of an inspector.

### Solution to Problem

An information processing system of the present disclosure includes: an imaging apparatus capable of capturing an image of a display apparatus having a screen that displays an image or a fixed display object; and an information processing apparatus. The information processing apparatus has a function of receiving data of a captured image from the imaging apparatus and specifies an installation position of the imaging apparatus from the captured image of the display apparatus or the fixed display object captured by the imaging apparatus.

### Advantageous Effects of Invention

According to the present disclosure, it is possible to specify an installation position of an imaging apparatus installed in transportation means for passengers, freight, and the like, and reduce labor of an inspector.

Problems, configurations, and effects other than those described above will be clarified by the following description of embodiments, and the like.

### Brief Description of Drawings

[FIG. 1] FIG. 1 is a view illustrating an example of a display apparatus and an imaging apparatus in a railway car according to an embodiment.
[FIG. 2] FIG. 2 is a block diagram illustrating an example of an information processing system according to the embodiment.
[FIG. 3] FIG. 3 is a plan view illustrating an example of installation positions of the display apparatus and the imaging apparatus in the entire railway car according to the embodiment.
[FIG. 4] FIG. 4 is a view illustrating an example of a management table screen obtained by collating an image transmitted to the display apparatus with an image captured by the imaging apparatus in the configuration illustrated in FIG. 3.
[FIG. 5] FIG. 5 is a flowchart illustrating an example of processing of specifying an installation position of an imaging apparatus according to a first embodiment.
[FIG. 6] FIG. 6 is a flowchart illustrating an example of processing of specifying an installation position of an imaging apparatus according to a second embodiment.
[FIG. 7] FIG. 7 is a flowchart illustrating an example of processing of specifying installation positions of a display apparatus and an imaging apparatus according to a third embodiment.
[FIG. 8] FIG. 8 is an example of a screen that displays a list of detection results (test images) of abnormal states of the display apparatus according to the third embodiment.

### Description of Embodiments

The present disclosure is directed to specifying an installation position of an imaging apparatus installed in transportation means for passengers, freight, and the like. The present disclosure is also directed to specifying an installation position of a display apparatus installed in the transportation means, or the like. Further, the present disclosure is directed to determining whether at least one of the display apparatus and the imaging apparatus installed in the transportation means, or the like, is in a normal state.

Here, the passengers, freight, and the like, include a person, an animal, an article, and the like.

In particular, the present disclosure relates to a technology for specifying at least an installation position of an imaging apparatus and specifying an abnormal state of the display apparatus and the imaging apparatus in a car such as a railway car in which the display apparatus and the imaging apparatus are installed.

Hereinafter, embodiments of the present disclosure will be described in detail.

A first embodiment includes a display apparatus, an imaging apparatus capable of capturing an image of a display screen of the display apparatus, and an information processing apparatus that manages installation position information of the display apparatus and captures an image captured by the imaging apparatus, in which the imaging apparatus specifies the installation position of the imaging apparatus in an on-vehicle system that does not have the installation position information.

A second embodiment has a configuration including installation position information (such as a QR code (registered trademark) and a bar code) displayed in a car, an imaging apparatus capable of capturing the installation position information, and an information processing apparatus that captures an image captured by the imaging apparatus, in which the imaging apparatus specifies an installation position of the imaging apparatus in an on-vehicle system that does not have the installation position information.

A third embodiment is a configuration for specifying an abnormal state of the display apparatus and the imaging apparatus in the system according to the first embodiment.

First, a configuration common to the first, second, and third embodiments will be described.

Note that, in the drawings of the present specification, elements having substantially the same function or configuration will be denoted by the same reference numerals, and redundant description will be omitted.

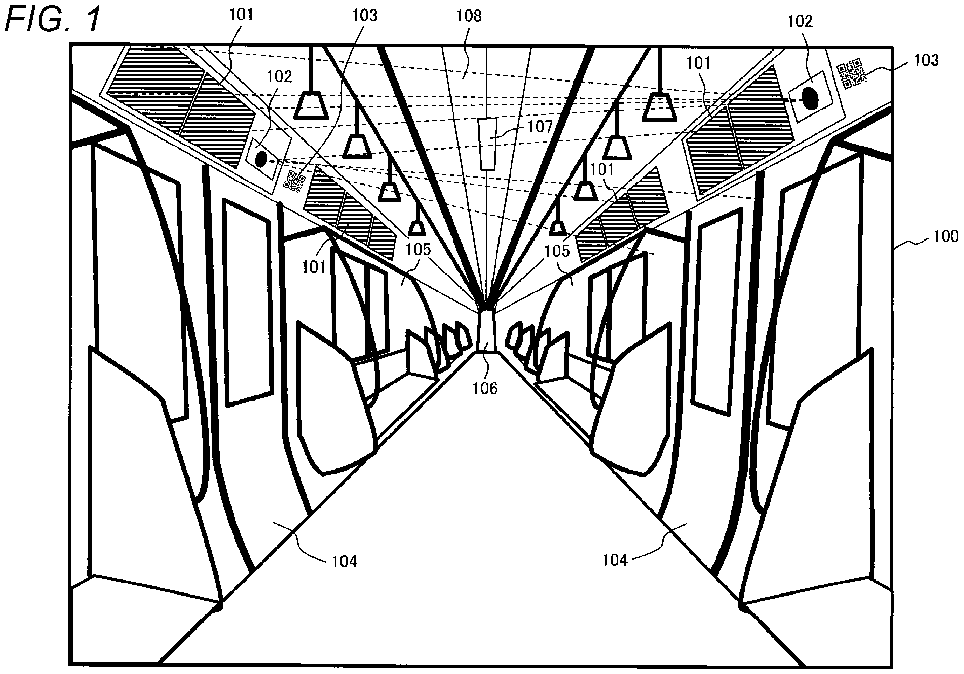

FIG. 1 is a view illustrating an example of a display apparatus and an imaging apparatus in a railway car according to the first, second, and third embodiments.

A display apparatus 101 and an imaging apparatus 102 are arranged in a railway car 100 illustrated in the drawing.

The display apparatus 101 is a liquid crystal display, or the like, that displays operation information and company advertisements to passengers. For example, the display apparatus 101 is installed above an opening and closing door 104 through which a passenger gets on and off. The display apparatus 101 is not limited to be installed above the opening and closing door 104, and may be installed above an upper mesh shelf 105 of a passenger seat or above a pass-through door 106 that partitions a through passage between the railway cars.

The imaging apparatus 102 is a security camera, or the like, that captures an image of the inside of the car. For example, the imaging apparatus 102 is installed above the opening and closing door 104. The imaging apparatus 102 may be installed in a car interior fluorescent lamp attachment portion 107 in the center of the car or a car ceiling portion 108. Note that the imaging apparatus 102 is not limited to the security camera, and a sensor capable of reading an image displayed on the display apparatus 101 can be appropriately adopted.

Further a fixed display object 103 is a medium including information that enables specification of an installation position. Here, the information is also referred to as "installation position information". The installation position information includes, for example, a QR code (registered trademark), a bar code, a number, an alphabet, and the like. The installation position information may include, as its content, a number, an alphabet, and the like, indicating the number and the installation position of the car in which the opening and closing door is installed. In the drawing, a QR code (registered trademark) is illustrated as an example. The installation position of the fixed display object 103 is on a lintel surface, but is not limited to the lintel surface, and may be, for example, a wall surface of the railway car or a window glass of the opening and closing door. The fixed display object 103 may be a seal and may be attached to the wall surface or the window glass.

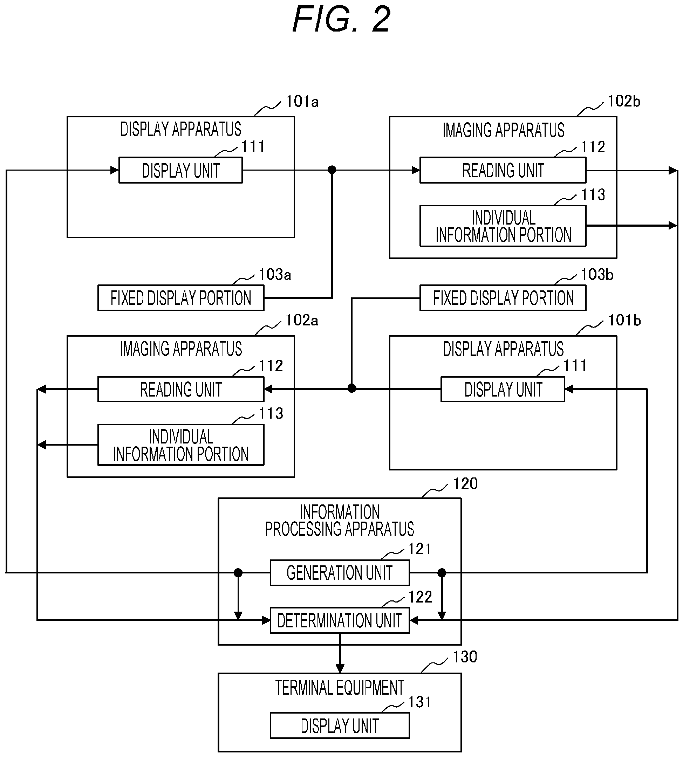

FIG. 2 is a block diagram illustrating an example of an information processing system according to the embodiment.

As illustrated in the drawing, the information processing system includes display apparatuses 101a and 101b, imaging apparatuses 102a and 102b, and an information processing apparatus 120 as basic elements.

In the drawing, the display apparatus 101a and the imaging apparatus 102a are illustrated as one set, and the display apparatus 101b and the imaging apparatus 102b are illustrated as another set. Here, the display apparatus 101a is installed at a position where the imaging apparatus 102b can capture an image of the display apparatus 101a. Similarly, the display apparatus 101b is installed at a position where the imaging apparatus 102a can capture an image of the display apparatus 101b. In the present example, for convenience of description, one display apparatus and one imaging apparatus are configured per set, but a plurality of display apparatuses and imaging apparatuses may be configured per set.

The display apparatuses 101a and 101b include a display unit 111 which is a display screen such as a liquid crystal display on which operation information and a company advertisement are to be displayed.

The imaging apparatuses 102a and 102b include a reading unit 112 and an individual information portion 113. The reading unit 112 is an imaging element, or the like, capable of capturing images to be displayed on the display apparatuses 101a and 101b or information including a car number and an installation position to be displayed on fixed display objects 103a and 103b. The individual information portion 113 is individual information of the imaging apparatus such as a MAC Address or a USB connection port number.

As described above, the fixed display objects 103a and 103b are information which is displayed on the lintel surface and which includes the car number and the installation position where the opening and closing door is installed. The fixed display object 103a is installed at a position where the imaging apparatus 102b can capture an image of the fixed display object 103a, and similarly, the fixed display object 103b is installed at a position where the imaging apparatus 102a can capture an image of the fixed display object 103b.

Furthermore, the information processing apparatus 120 is connected to the display apparatuses 101a and 101b and the imaging apparatuses 102a and 102b via a wired or wireless network. Examples of the wired network include a USB cable, and the like.

The information processing apparatus 120 includes a generation unit 121 and a determination unit 122.

The generation unit 121 allocates installation positions of the display apparatuses 101a and 101b, generates an image including the installation positions and an image including an arbitrary signal pattern such as a color bar, and transmits the image to the display unit 111 and the determination unit 122.

The determination unit 122 receives the image transmitted by the generation unit 121 and receives the image captured by the reading unit 112 of the imaging apparatuses 102a and 102b and the individual information held by the individual information portion 113. Furthermore, the determination unit 122 compares the installation position information read from the image received from the generation unit 121 with the installation position information read from the image captured by the reading unit 112 of the imaging apparatuses 102a and 102b and specifies the installation positions of the imaging apparatuses 102a and 102b. In addition, the determination unit 122 collates the image including the arbitrary signal pattern received from the generation unit 121 with the image captured by the reading unit 112 of the imaging apparatuses 102a and 102b and specifies abnormal states of the display apparatuses 101a and 101b and the imaging apparatuses 102a and 102b.

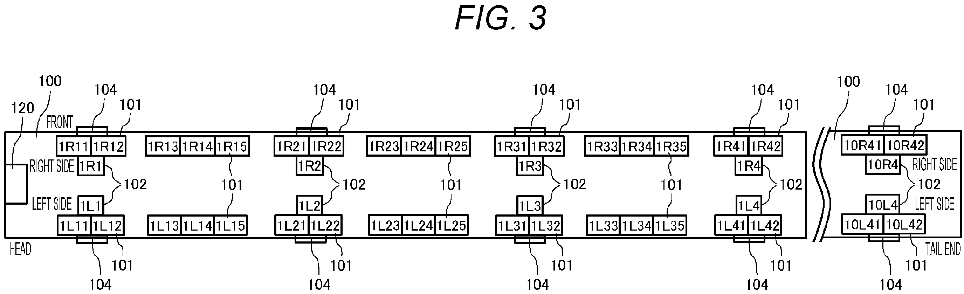

Furthermore, the information processing system illustrated in FIG. 3 includes terminal equipment 130 that receives a collation result by the determination unit 122. The terminal equipment 130 includes a display unit 131 and can display the collation result on the display unit 131. Note that the terminal equipment 130 may be an on-vehicle terminal installed in a driver seat or a conductor seat or may be a mobile terminal owned by an inspector.

FIG. 3 is a plan view illustrating an example of the installation positions of the display apparatus and the imaging apparatus in the entire railway car according to the embodiment.

In this drawing, in the railway car 100, two display apparatuses 101, one imaging apparatus 102, and three display apparatuses 101 are installed near the opening and closing door 104, between the opening and closing doors 104, respectively.

The display apparatus 101 and the imaging apparatus 102 are arranged to face each other in a left-right direction with respect to a traveling direction. 34 display apparatuses 101 and 8 imaging apparatuses 102 are installed per car. Cars are configured in a similar manner from the leading car to the last car, and the display apparatuses 101 and the imaging apparatuses 102 of the number obtained by multiplying the above-described numbers per train by the total number of cars is required.

Note that numbers and alphabets of the display apparatus 101 and the imaging apparatus 102 indicate installation position information. For example, 1R11 is displayed in the image of the display apparatus 101 installed at the first position in the traveling direction from the position of the right first opening and closing door 104 in the traveling direction of the first car. Similarly, display of 10L42 indicates the installation position information of the display apparatus 101 installed at the second position in the traveling direction from the position of the fourth left opening/closing door 104 in the traveling direction of the tenth car.

In addition, only one information processing apparatus 120 connected to the display apparatus 101 and the imaging apparatus 102 is required per train and is installed in the vicinity of the leading car cab in this example. Note that this example simulates a configuration adopted in recent railway conventional lines, and a conceivable configuration including an installation position and the number of installations is not limited thereto.

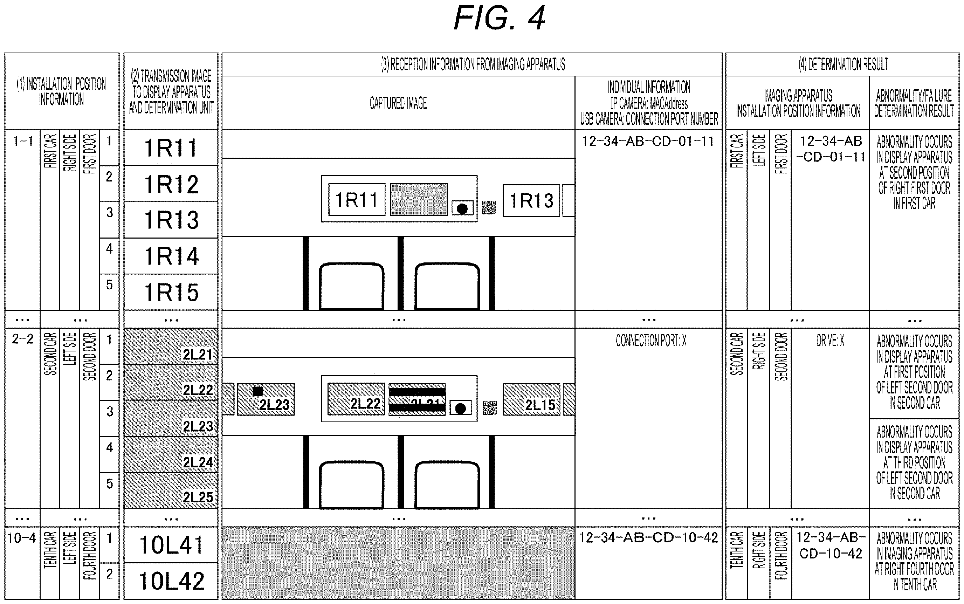

FIG. 4 illustrates an example of a management table screen obtained by collating an image transmitted to the display apparatus with an image captured by the imaging apparatus in the configuration illustrated in FIG. 3.

The leftmost column "(1) installation position information" indicates an installation position indicating at which position of which car of the railway car the display apparatus 101 and the imaging apparatus 102 are installed. The left column indicates an item number, at which one of the first car to the last tenth car the apparatuses are installed, which one of the left and right side the apparatuses are located in the traveling direction, at which position of the opening and closing door from the head the apparatuses are installed, and the position of the display apparatus 101 from the head.

The second column from the left, "(2) transmission image to display apparatus", is an image transmitted from the generation unit 121 of the information processing apparatus 120 to the display apparatus 101 and the determination unit 122. The present image may be an image including the installation position of the display apparatus or may be a signal having different luminance and hue such as a color bar.

Examples indicate in item numbers 1-1 and 10-4 are images including installation positions of the display apparatuses. As described above, for example, the display of 1R11 is the installation position information of the display apparatus installed at the first position in the traveling direction from the position of the first opening and closing door on the right (Right) side in the traveling direction of the first car.

An example indicated in item number 2-2 is a signal having different luminance and hue, such as a color bar. Hue, vividness, and brightness are arbitrarily changed and displayed according to an area of a screen of the display apparatus. This display indicates an image of a horizontal line bar as an example.

The information processing apparatus manages the installation position in a centralized manner by associating and allocating the installation position information of the display apparatus and the image transmitted to the display apparatus.

Next, a third column from the left, "(3) reception information from imaging apparatus" manages individual information read from the imaging apparatus and an image captured by the imaging apparatus. The individual information is, for example, a MAC address in a case where the imaging apparatus is an IP camera and is a connection port number connected to the information processing apparatus in a case where the imaging apparatus is a web camera, a QR code (registered trademark) reader, or a bar code reader connected via a USB. The individual information read out according to the connected imaging apparatus is integrally managed in association with the captured image. In the captured image, all subjects falling within an angle of view of the imaging apparatus are captured, and a display screen of the display apparatus facing the imaging apparatus, the imaging apparatus, a QR code (registered trademark) displayed on the lintel, part of the window glass of the opening/closing door, and the like, are displayed.

Then, the rightmost column "(4) determination result" displays a determination result of collating the transmission image to the display apparatus associated with the installation position information of the display apparatus managed by "(2) transmission image to display apparatus" with the captured image managed by "(3) reception information from imaging apparatus".

A collation process is as follows.

For example, in a case of item number 1-1, an image including installation position information of "1R11", "1R12", "1R13", "1R14", and "1R15" is transmitted to the display apparatus installed at the position of the right first door of the first car, and an image including "1R11", "1R12", "1R13", "1R14", and "1R15" is extracted from "(3) reception information from imaging apparatus". The extracted image is identified as the imaging apparatus facing the right first door of the first car, that is, at the installation position of the first left door of the first car. Alternatively, by reading a QR code (registered trademark) in which the installation position information is incorporated, the imaging apparatus may be similarly identified as the imaging apparatus at the installation position described above. In this event, the specified captured image and the individual information are associated with each other, and thus, the installation position information of the imaging apparatus can be grasped. In this example, display states of "1R11", "1R12", and "1R14" are normal, but a display state of "1R12" is the blackout. From this result, it is determined that the display apparatus of the left first door of the first car is abnormal.

In addition, in a case of the item number 10-4, an image including the installation position information of "10L41" and "10L42" is transmitted to the display apparatus installed at the position of the left fourth door of the tenth car, and an image including "10L41" and "10L42" is tried to be extracted from "(3) reception information from imaging apparatus". However, the entire captured image of the imaging apparatus installed facing the left fourth door of the tenth car, that is, originally at the position of the right fourth door of the tenth car is blackout, and thus, it is determined that a blackout abnormality occurs at the imaging apparatus of the right fourth door of the tenth car.

Further, in a case of item number 2-2, an image with horizontal stripes is transmitted to the display apparatus installed at the position of the left second door of the second car, and in the image obtained from "(3) reception information from imaging apparatus", horizontal line noise occurs in the display image of "2L21" in the first image starting from the opening and closing door, and a pixel missing occurs in the display image of "2L23" in the third image. From this result, it is determined that the horizontal line noise abnormality occurs in the display apparatus installed at the first position of the left second door of the second car, and it is determined that the pixel missing abnormality occurs in the display apparatus installed at the third position of the left second door of the second car.

The configuration common to the first, second, and third embodiments has been described above.

Desirable configurations of the information processing system and the information processing apparatus of the present disclosure will be described below.

The information processing system desirably includes a display apparatus as a component in addition to the imaging apparatus and the information processing apparatus which are essential components. Then, the information processing apparatus desirably transmits data including content to be displayed on the screen of the display apparatus to the display apparatus and collates the data transmitted to the display apparatus with an image of the display apparatus captured by the imaging apparatus to specify the installation position of the imaging apparatus.

It is desirable that the information processing apparatus determines whether at least one of the display apparatus and the imaging apparatus is in a normal state by using a result of the collation.

It is desirable that the information processing apparatus determines that the imaging apparatus is not operating normally in a case where the captured image captured by the imaging apparatus is in the blackout.

In a case where part of the captured image captured by the imaging apparatus is missing as a result of the collation, it is desirable that the information processing apparatus determines that there is a display defect in the display apparatus.

The captured image desirably includes installation position information displayed on the screen of the display apparatus or displayed on a portion other than the screen of the display apparatus or a fixed display object.

Preferably, the information processing system further includes terminal equipment, and the information processing apparatus transmits data of the specified installation position of the imaging apparatus to the terminal equipment.

The display apparatus, the imaging apparatus, and the fixed display object are desirably installed in a railway car.

### (First Embodiment)

Next, a method of specifying an installation position of an imaging apparatus in an on-vehicle system including a display apparatus, an imaging apparatus capable of capturing an image of a display screen of the display apparatus, and an information processing apparatus that manages installation position information of the display apparatus, in which the imaging apparatus does not have the installation position information will be described.

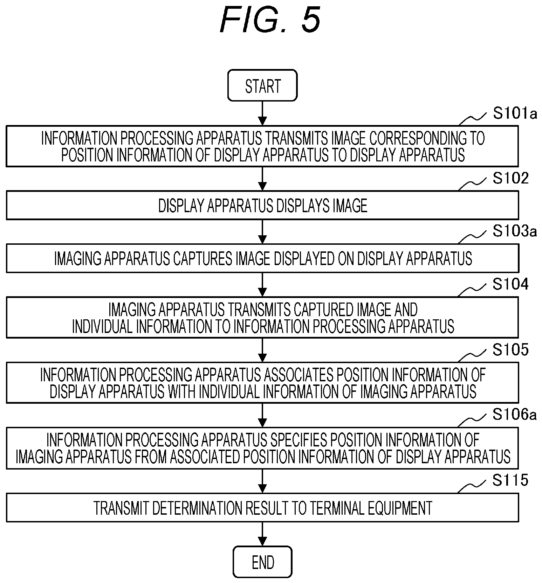

FIG. 5 is a flowchart illustrating an example of processing of specifying an installation position of the imaging apparatus according to the first embodiment.

In the drawing, the generation unit 121 (FIG. 2) of the information processing apparatus 120 transmits, to the display apparatus 101 and the determination unit 122, data related to which car the display apparatus 101 is installed, which one of the left and right sides with respect to the traveling direction, and which position from the head side of the opening and closing door, the display apparatus 101 is installed (step S101a) .

The display apparatus 101 displays an image on the display unit 111 on the basis of the data received from the generation unit 121 (step S102) .

The imaging apparatus 102 installed at a position where an image of the display apparatus 101 can be captured, captures an image displayed on the display unit 111 (step S103a) .

The imaging apparatus 102 transmits the captured image and individual information such as a MAC address and a USB connection port number included in the individual information portion 113 to the determination unit 122 of the information processing apparatus 120 (step S104) .

The determination unit 122 collates the installation position information of the display apparatus 101 managed as the data of "(2) transmission image to display apparatus" (FIG. 4) received from the generation unit 121 with the information of the captured image managed as the data of "(3) reception information from imaging apparatus" (FIG. 4) and associates the installation position information of the display apparatus 101 and the imaging apparatus 102 obtained from the image (step S105) .

The determination unit 122 receives the individual information of the imaging apparatus 102 associated with the information of the captured image managed as the data of "(3) reception information from imaging apparatus" (FIG. 4) and specifies the installation position of the imaging apparatus 101 from the installation position information of the display apparatus 102 (step S106a) .

The determination unit 122 transmits the obtained determination result to the terminal equipment 130 such as an on-vehicle terminal or a mobile terminal to notify the inspector (step S115) .

### (Second Embodiment)

Next, a method of specifying an installation position of an imaging apparatus in an on-vehicle system including installation position information displayed in a car, an imaging apparatus capable of capturing an image of the installation position information, and an information processing apparatus that captures the image captured by the imaging apparatus, in which the imaging apparatus does not have the installation position information will be described.

In other words, a case where the on-vehicle system has the installation position information displayed in the car instead of the display apparatus of the first embodiment will be described.

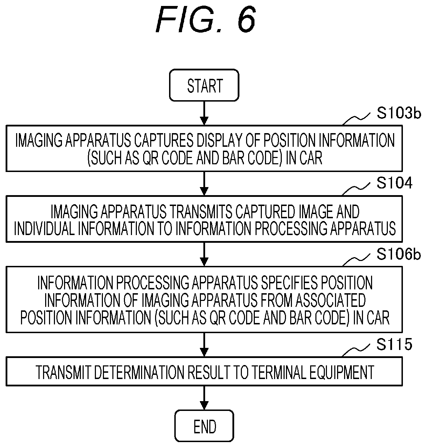

FIG. 6 is a flowchart illustrating an example of processing of specifying an installation position of the imaging apparatus according to the second embodiment.

The imaging apparatus 102 installed at a position where an image of the fixed display object 103 having the installation position information displayed in the car can be captured, captures the installation position information displayed in the car (step S103b).

Next step S104 is the same as that of the first embodiment, and thus, description thereof will be omitted.

The determination unit 122 grasps individual information of the imaging apparatus 102 associated with the captured image managed as data of "(3) reception information from imaging apparatus" (FIG. 4) and specifies the installation position of the imaging apparatus 102 from the installation position information obtained from the captured image (step S106b).

Hereinafter, step S115 is the same as that of the first embodiment, and thus, description thereof will be omitted.

### (Third Embodiment)

Next, a method of specifying an abnormal state of a display apparatus and an imaging apparatus in an on-vehicle system including the display apparatus, the imaging apparatus capable of capturing an image of a display screen of the display apparatus, and an information processing apparatus that manages installation position information of the display apparatus, in which the imaging apparatus does not have the installation position information will be described.

In other words, a case of specifying an abnormal state of the display apparatus and the imaging apparatus will be described.

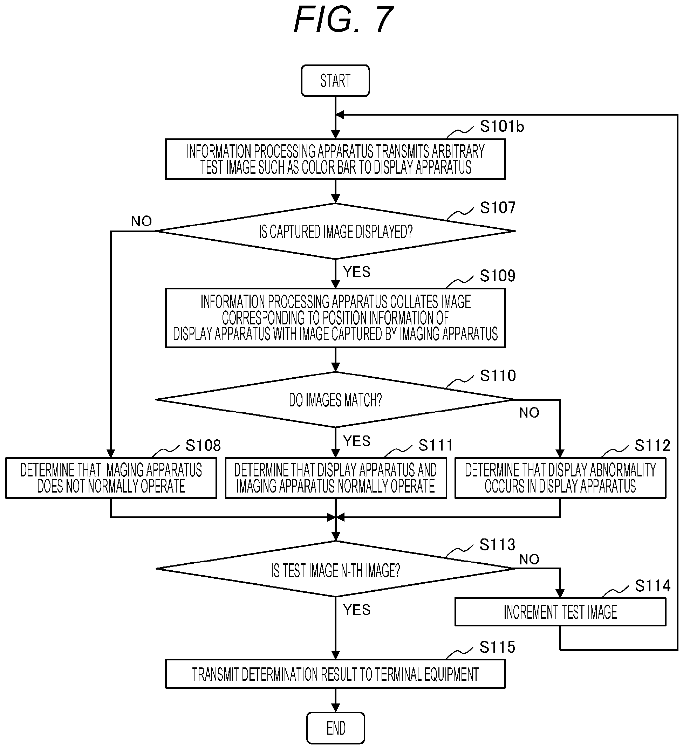

FIG. 7 is a flowchart illustrating an example of processing of specifying installation positions of the display apparatus and the imaging apparatus according to the third embodiment.

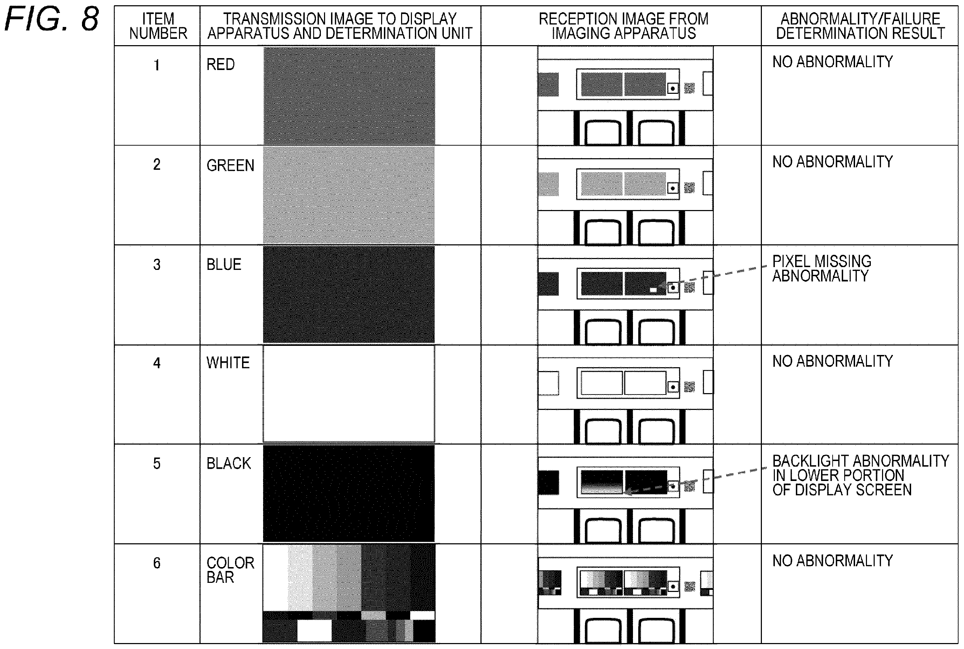

FIG. 8 is an example of a screen that displays a list of detection results (test images) of an abnormal state of the display apparatus according to the present embodiment. This drawing corresponds to test images of item number 1 to 6.

As illustrated in FIG. 7, first, the information processing apparatus 120 that has specified the installation position of the imaging apparatus 102 according to the first embodiment transmits an arbitrary test image such as a color bar corresponding to the installation position of the display apparatus 101 from the generation unit 121 to the display apparatus 101 and the determination unit 122 (step S101b) .

Next, the determination unit 122 of the information processing apparatus 120 determines whether the image captured by the imaging apparatus 102 is displayed or whether the screen is not displayed like a blackout (the entire screen is black), for example (step S107).

In a case where the image is not displayed, it is determined that the imaging apparatus 102 is not normally operating (step S108), and in a case where the image is displayed, the image corresponding to the installation position of the display apparatus 101 transmitted to the display apparatus 101 and the determination unit 122 is collated with the image captured by the imaging apparatus 102 (step S109).

Subsequently, it is determined whether the image corresponding to the installation position of the display apparatus 101 transmitted to the display apparatus 101 and the determination unit 122 matches the image captured by the imaging apparatus 102 (step S110).

In a case where the images match as a result of the collation, it is determined that the display state of the display unit 111 of the display apparatus 101 is normal (step S111).

In a case where the images do not match, it is determined that the display state of the display unit 111 of the display apparatus 101 is abnormal (step S112).

After the determination in steps S108, Sill, and S112, it is determined whether an arbitrary test image such as the color bar transmitted to display apparatus 101 and determination unit 122 is the N-th image (N is a natural number) (step S113).

If the test image is the N-th image, the processing proceeds to step S115. On the other hand, if the image is not the N-th image, the test image is incremented (step S114), and then the processing returns to step S101b to transmit the incremented image. Here, the increment means making the test image (N+1)-th.

For the image to be incremented, for example, as indicated in a field of "transmission image to display apparatus and determination unit" in FIG. 8, the entire screen is changed in order of item numbers 1 to 6, red, green, blue, white, black, and color bar according to an area of the screen of the display apparatus.

In this drawing, as indicated in the "abnormality/failure determination result" column, no abnormality is found in item numbers 1, 2, 4, and 6. As indicated in the "reception image from imaging apparatus" column, red of item number 1 and green of item number 2 indicate no abnormality, but only blue of item number 3 indicates abnormal display due to partial pixel missing. Furthermore, in a case of black of item number 5, a lower part of the display screen is thin, and black is not normally displayed due to backlight abnormality. In this manner, the display image of the display apparatus in which signals having different luminance and hue are changed is compared with the image received from the imaging apparatus, and the hue, the vividness, the brightness, and the like, are collated over the details of the screen.

Returning to FIG. 7, step S115 is the same as that of the first embodiment, and thus, description thereof will be omitted.

### (Other Embodiments)

Note that, in the above-described embodiments, the information processing apparatus for car and the system have been described, but the present disclosure is not limited thereto and can be widely applied to other various systems, apparatuses, methods, programs, and the like.

Note that the above-described embodiments do not limit the content of the present disclosure, and it is a matter of course that other various application examples, modifications, and the like, can be taken without departing from the gist of the present disclosure.

In addition, the above-described embodiments describe the configurations of the apparatuses in detail and specifically in order to describe the content of the present disclosure in an easy-to-understand manner and are not necessarily limited to those having all the described configurations. In addition, part of the configuration of the embodiment described here can be replaced with the configuration of another embodiment. Furthermore, the configuration of a certain embodiment can be added to the configuration of another embodiment. In addition, it is also possible to add, delete, or replace other configurations for part of the configuration of each embodiment.

For example, although the above embodiments are described on the premise of a railway car, content of the present disclosure is not limited thereto, and can also be applied to a bus including a plurality of display apparatuses and a plurality of imaging apparatuses, a car such as a taxi, an airplane, a rocket, a space station, and the like. Furthermore, the display apparatus and the imaging apparatus are not limited to those installed indoors and may be installed outdoors, for example, on an outer wall surface of a railway car, or the like.

Hereinafter, effects of the present disclosure will be collectively described.

According to the present disclosure, in a system including a display apparatus, an imaging apparatus, and an information processing apparatus that manages installation position information of the display apparatus, even in a case where the imaging apparatus does not have the installation position information, it is possible to easily specify the installation position of the imaging apparatus and to easily specify an abnormal state of the display apparatus and the imaging apparatus.

Furthermore, according to the present disclosure, an inspector can quickly and easily grasp not only an installation position of a display apparatus in which an abnormality or a failure has occurred but also an installation position of an imaging apparatus in which an abnormality or a failure has occurred, so that a period until the inspector rushes to the occurrence site can be shortened.

Furthermore, according to the present disclosure, the inspector can grasp a state of the abnormality or the failure of the display apparatus and the imaging apparatus before heading to the occurrence site, so that it is possible to accurately prepare a substitute part or a tool to be used for replacement or repair according to the state of the abnormality or the failure.

### Reference Signs List

- 100: railway car
- 101: display apparatus
- 102: imaging apparatus
- 103: fixed display object
- 104: opening and closing door
- 105: upper mesh shelf
- 106: pass-through door
- 107: in-car fluorescent lamp attachment portion
- 108: car ceiling portion
- 111: display unit
- 112: reading unit
- 113: individual information portion
- 120: information processing apparatus
- 121: generation unit
- 122: determination unit
- 130: terminal equipment
- 131: display unit

## Claims

1. An information processing system comprising:
an imaging apparatus capable of capturing an image of a display apparatus having a screen that displays an image or a fixed display object; and
an information processing apparatus,
wherein the information processing apparatus has a function of receiving data of a captured image from the imaging apparatus, and specifies an installation position of the imaging apparatus from the captured image of the display apparatus or the fixed display object captured by the imaging apparatus.

2. The information processing system according to claim 1, wherein
the information processing system includes the display apparatus as a component, and
the information processing apparatus transmits data including content to be displayed on the screen of the display apparatus to the display apparatus, and specifies the installation position of the imaging apparatus by collating the data transmitted to the display apparatus with the image of the display apparatus captured by the imaging apparatus.

3. The information processing system according to claim 2, wherein the information processing apparatus determines whether at least one of the display apparatus and the imaging apparatus is in a normal state by using a result of the collation.

4. The information processing system according to claim 1, wherein the information processing apparatus determines that the imaging apparatus does not operate normally in a case where the captured image captured by the imaging apparatus is in a blackout.

5. The information processing system according to claim 2, wherein the information processing apparatus determines that the display apparatus has a display defect in a case where part of the captured image captured by the imaging apparatus is missing as a result of the collation.

6. The information processing system according to claim 1, wherein the captured image includes information displayed on the screen of the display apparatus or installation position information displayed on a portion other than the screen of the display apparatus or the fixed display object.

7. The information processing system according to claim 1, further comprising terminal equipment,
wherein the information processing apparatus transmits data of the specified installation position of the imaging apparatus to the terminal equipment.

8. An information processing apparatus having a function of receiving data of a captured image from an imaging apparatus capable of capturing an image of a display apparatus having a screen that displays an image or a fixed display object, and specifies an installation position of the imaging apparatus from the captured image of the display apparatus or the fixed display object captured by the imaging apparatus.

9. The information processing apparatus according to claim 8, wherein the information processing apparatus transmits data including content to be displayed on the screen of the display apparatus to the display apparatus, and specifies the installation position of the imaging apparatus by collating the data transmitted to the display apparatus with the captured image of the display apparatus captured by the imaging apparatus.

10. The information processing apparatus according to claim 8, wherein the display apparatus, the imaging apparatus, and the fixed display object are installed in a railway car.
